# EUROPEAN PATENT SPECIFICATION

(11) **EP 0 926 380 B1**
(45) Date of publication and mention of the grant of the patent: **22.10.2003**
(21) Application number: 98124594.7
(22) Date of filing: 23.12.1998
(51) Int. Cl.: F16F 1/38, F16F 15/08, B63H 20/00, B25F 5/00

(54) **Control handle for a vibration generating apparatus**
Betätigungsgriff für ein vibrationserzeugendes Gerät
Poignée de commande pour appareil générateur de vibrations

(30) Priority: 26.12.1997 JP 35977597
(43) Date of publication of application: 30.06.1999
(73) Proprietor: SANSHIN INDUSTRIES CO., LTD., Hamamatsu-shi, Shizuoka 432 (JP)
(72) Inventor: Tasaka, Yoshiaki, Sanshin Industries Co., Ltd., Hamamatsu-shi, Shizuoka 432 (JP); Nozue, Toshihiro, Sanshin Industries Co., Ltd., Hamamatsu-shi, Shizuoka 432 (JP); Kameoka, Kentaro, Sanshin Industries Co., Ltd., Hamamatsu-shi, Shizuoka 432 (JP); Suzuki, Noritoshi, Sanshin Industries Co., Ltd., Hamamatsu-shi, Shizuoka 432 (JP)
(74) Representative: Grünecker, Kinkeldey, Stockmair & Schwanhäusser Anwaltssozietät

(56) References cited:
- DE-A- 3 145 337
- US-A- 4 507 090
- US-A- 5 145 427
- US-A- 5 443 406
- PATENT ABSTRACTS OF JAPAN vol. 017, no. 483 (M-1472), 2 September 1993 & JP 05 116686 A (SUZUKI MOTOR CORP), 14 May 1993

## Description

Conventional outboard engines are composed of a clamp bracket that attaches to the stem of a boat, a swivel bracket that allows said clamp bracket to rotate freely in the vertical direction around a pivot point, a pivotally supported swivel bracket mounted on steering bracket 7 that allows rotation in the horizontal plane, a guide exhaust (engine support) that is supported in two places above and below the steering bracket by mounts (anti-vibration rubber), and an upper case (case for the propulsion apparatus); that structure being such that the engine vibrations are absorbed by the mount and not transmitted to the steering handle.

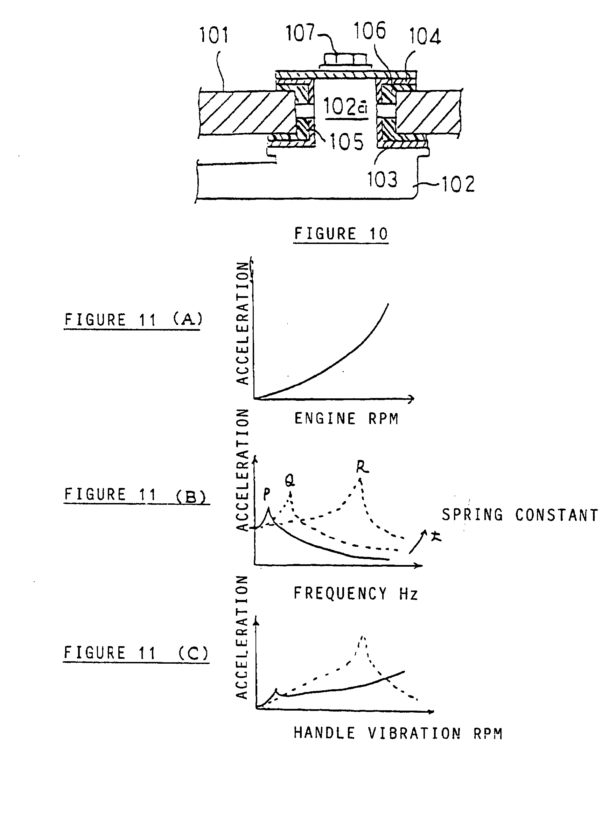

On the other hand, in the case of small, single-cylinder outboard engines for example, the foregoing structure can be simplified to what is called a full pivot structure wherein the upper case attaches directly by upper and lower mounts to allow it to freely rotate in the horizontal plane, wherein the steering handle is attached to that upper case. Since the engine vibrations are transmitted directly to the steering handle in this case, collars 103, 104 lie between the steering bracket 101 and steering handle 102 as shown in Figure 10, and anti-vibration rubber 105, 106 is compressed between the collars 103, 104 and the steering bracket to reduce the engine vibration that is transmitted from the steering bracket 101 to the steering handle.

However, as is shown in Figure 11(A), engine vibrations increase as a square function with respect to the engine RPM. (revolutions per minute). Further, as shown in Figure 11(B), the vibration attenuation by the anti-vibration rubber between the engine and the handle exhibits resonance peaks P, Q and R at certain frequencies, and that resonance is such that the higher the spring constant, the higher the vibration frequency, and moreover, the stronger the resonance.

Thus, with regard to the above described conventional anti-vibration structure, the anti-vibration rubber 105, 106 is under compression between the steering bracket 101 and steering handle 102, and since the structure is such that the outboard engine can be turned in the horizontal direction or pivoted up and down, it is necessary to use a high spring-constant (hard) rubber for the anti-vibration rubber members 105, 106. Accordingly, as shown by point R in Figure 11 (B), sizable vibrations are produced at high frequencies. As a result, as shown by the broken line in Figure 11(C), there is a problem with vibration of the engine handle when the engine is operated at a constant high RPM level. There is a further problem with the longevity of the anti-vibration mounts due to wear.

The steering handle in document US-A-5 145 427 discloses the features of the preamble of claim 1.

The present invention addresses the foregoing problems and has as its objective the provision of a control handle for a vibration generating apparatus that allows to minimize the vibrations transmitted from the apparatus to the handle, particularly for higher vibration frequencies.

This technical problem is solved by a control handle according to claim 1 and also by an outboard engine according to claim 10.

Since the resilient member can freely vibrate in a clearance between the apparatus side and the handle side, it is possible to use a resilient material with a lower spring constant compared to conventional structures to achieve solely low resonance at low frequencies, and to reduce vibrations in the high engine RPM cruising range.

Further embodiments are set forth in the subclaims.

Examples of the invention will be described hereinafter with reference to the accompanying drawings.
**Figure 1** is a side view of a first embodiment of an outboard engine to which this invention has been applied.
**Figure 2** is a vertical sectional view of Figure 1.
**Figure 3** shows the anti-vibration structure for the steering handle of the outboard engine according to the first embodiment shown in a horizontal sectional view taken along line X-X of Figure 1 in the direction of the arrow.
**Figure 4** is a partial side view showing the embodiment of Figure 1 with the carrying handle omitted.
**Figure 5** is another embodiment of the invention shown in a sectional view that would correspond to the Y-Y line in Figure 4.
**Figure 6** is a view similar to that of Figure 3 for yet another embodiment of this invention.
**Figure 7** shows another embodiment of this invention: Figure 7 (A) is a partial sectional side view and Figure 7 (B) is a perspective view of some of the parts from 7 (A).
**Figure 8** shows plots of the test results for the embodiment of Figure 3.
**Figure 9** is an improvement to the cowling of Figure 1: Figure 9 (A) shows the top side view with the steering handle and carrying handle removed; Figure 9 (B) shows a sectional view taken in the direction of the arrow along line B-B of Figure 9 (A); and Figures 9 (C) and (D) are sectional views similar to that of Figure 9 (B) of additional embodiments.
**Figure 10** is a sectional view of an example of the anti-vibration structure for conventional steering handles.
**Figure 11** shows graphs of the topic of and the effects of this invention.

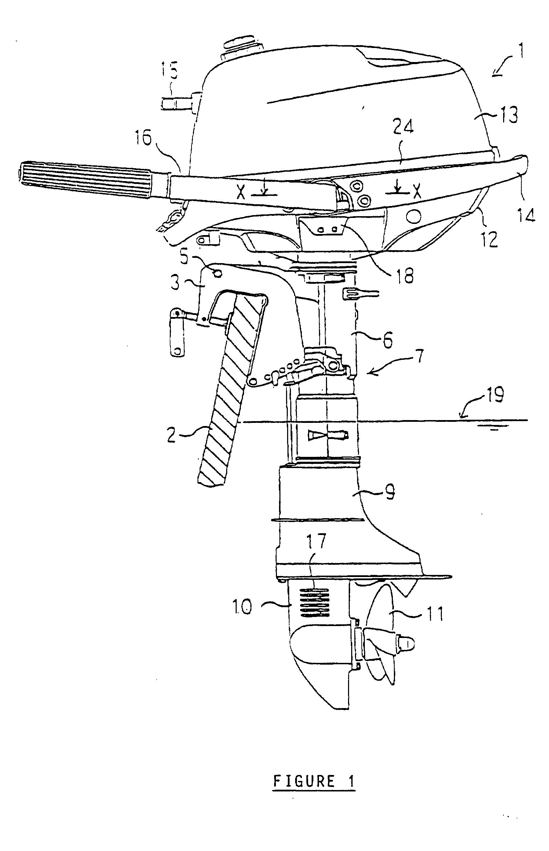

The inventions will be described below with reference to the figures. Figure 1 is a sideview of a first example of an outboard engine according to this invention in a side view. The outboard engine 1 is removably attached to the stern of the boat 2 by means of a clamp bracket 3, and a swivel bracket 6 allows the engine to pivot around a horizontal shaft 5 to tilt up and down. This swivel bracket 6 rotatably supports a propulsion unit 7 that allows its free rotation in the steering direction (in the horizontal plane).

The foregoing propulsion unit 7 has an upper case 9 that is rotatably supported on the swivel bracket, and a lower case 10 is attached to the bottom of the upper case 9 to constitute the complete casing. The propeller 11 is mounted at bottom of the lower case 10, and the bottom cowling 12 is attached at the top of the upper case 9. The top cowling 13 is removably attached to the bottom cowling, and a carrying handle 14 for transporting the outboard engine is attached around the whole perimeter of the bottom cowling 12.

In addition, the upper case 9 is attached to the bottom of the steering bracket 18, the cowling handle 14 is affixed to the top of the steering bracket 18, and the steering handle 16 is attached to the steering bracket 18. 15 represents the starter handle, 17 the cold coolant inlet, and 19 the surface of the water.

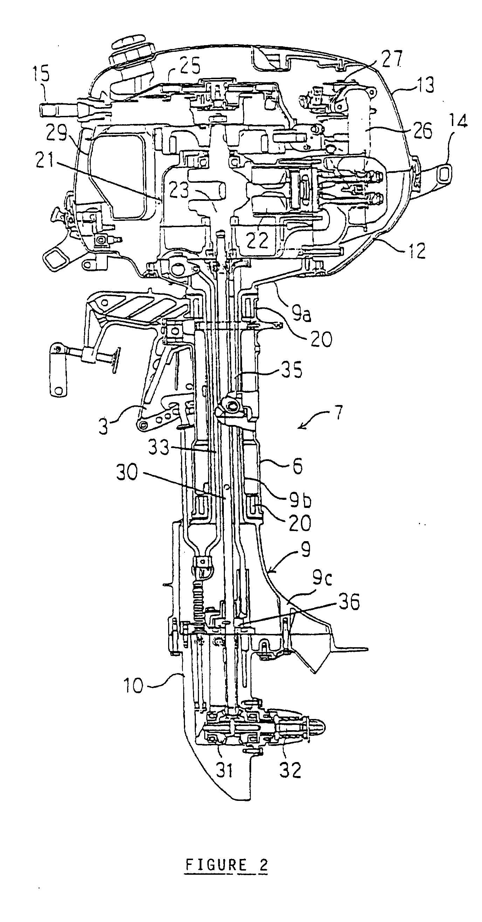

Figure 2 is a vertical section of Figure 1. The upper case 9 is hollow, and an engine connection member 9a is formed on the dish-like expanse at its top; at is bottom, a connection member 9c is formed to enable connection with the lower case, and a small-diameter cylinder 9b is formed between the connecting members 9a, 9c. Rubber mounts 20 attached to the swivel bracket 6 are positioned above and below this cylindrical member 9b to support the upper case 9 in a freely rotatable manner upon the swivel bracket 6.

The engine connecting area 9a of the upper case is connected to the engine 21. The engine 21 consists, for example, of a single cylinder, four-cycle engine. It is equipped with a horizontally deposed cylinder 22, and a vertically deposed crankshaft 23. Positioned around the engine 21 are a starter 25, intake manifold 26, carburetor 27, outboard engine fuel tank 29, etc. The drive shaft 30 is configured vertically inside the upper case 9 and lower case 10, and its top end is connected to the crankshaft 23, while the bottom end is connected by a bevel gear to the propeller shaft 32. Also, a shift rod 33 and coolant supply tube are also mounted vertically inside the upper case 9, and the lower end of the coolant supply tube is connected to the coolant pump 36.

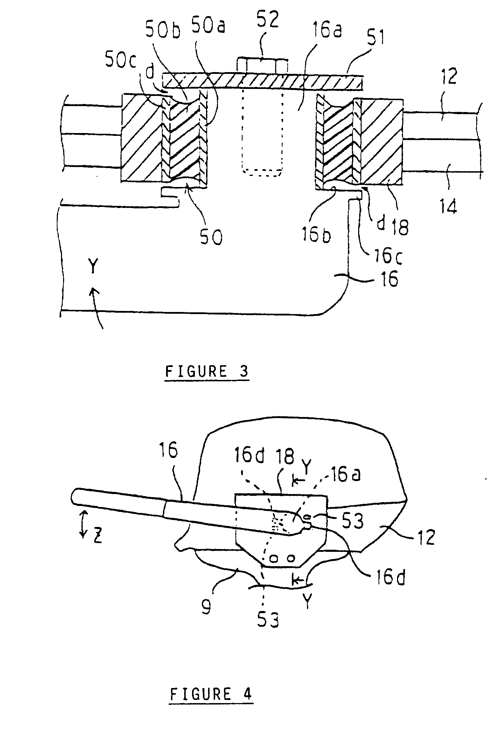

Figures 3 and 4 show an embodiment of the anti-vibration structure for the steering handle of an outboard engine according to this invention. Figure 3 is a horizontal section as seen in the direction of the arrow along the X-X line in Figure 1 and Figure 4 is a partial side view without the steering handle. As stated above, the upper case 9 is attached to the bottom of the steering bracket 18 and a carrying handle 14 is attached to the top of the steering bracket 18.

As shown in Figure 3, the operating shaft 16a is mounted horizontally with respect to the steering handle 16. The outside circumference of this operating shaft 16a attaches by means of a through-hole to the steering bracket by an anti-vibration member. The anti-vibration member 50 is composed of a resilient member 50b made of a soft, resilient material having a low spring constant, e.g. rubber or the like, which is fused to, glued in or compression fitted between an inner cylinder 50a and an outer cylinder 50b. Both cylinders are hollow sleeves having a plane cylindrical inner and outer circumferential surface. Further, there is a contact surface 16c which extends in the outer circumferential direction from the base area 16b of the operating handle 16a.

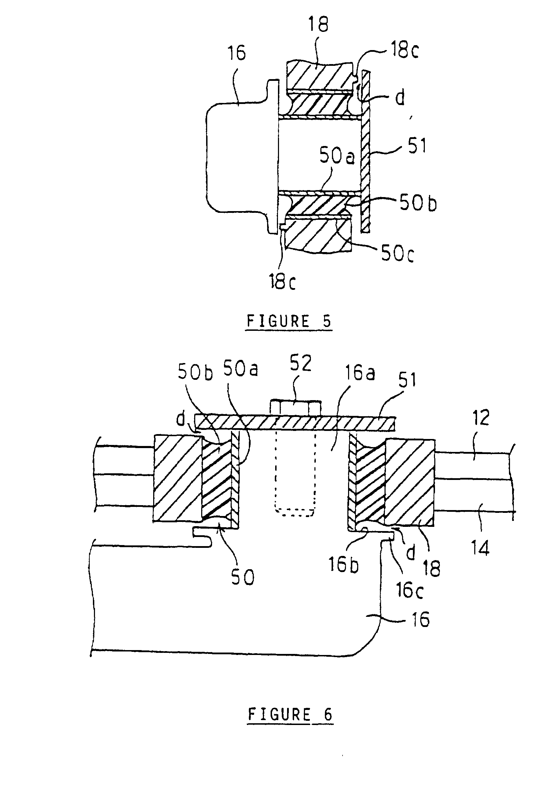

Further, the axial length of the operating shaft 16a and the inner cylinder 50a are identical, but the outer cylinder 50c has been designed shorter in axial direction. The operating shaft 16a is inserted into the inner cylinder 50a, and then an attachment plate 51 and bolt 52 are used to affix the operating shaft 16a to the inner cylinder 50a, whereby both ends of the outer cylinder 50c are structured and arranged in such manner that a clearance d exists between the attachment plate 51 and the contact surface 16c of the steering handle 16. Preferably the clearance d is of the same width at both axial ends of the outer cylinder 50c. The axial end faces of the resilient member 50b are each provided with an annular groove having a generally inwardly curved shape when viewed in cross-section as shown in Fig. 3 and also in Fig. 5. It is also possible to provide a groove only on one of the end faces of the resilient member 50b.

In Figure 4, a pair of contact pieces 16d are mounted to face each other in the arc of the of the operating shaft 16a of the steering handle 16. This structure allows the steering handle 16 to be rotated up and down in the direction Z, thereby making it possible to tilt the outboard engine when contact is made with the stop 53 on contact piece 16d.

The operation of this invention using the foregoing structure will now be explained. In Figure 3, the engine vibrations are transmitted by the anti-vibration member 50 from the upper case 9 to the steering bracket 18 and steering handle 16, but the structure is such that a clearance *d* is established between the attachment plate 51 and the contact surface 16c of the steering bracket 16 at either end of the outside cylinder 50c. Because this design allows the steering bracket 18 to freely vibrate between the attachment plate 51 and the base 16b, compared with the prior art structure, it is possible to use a resilient member 50b having a lower spring constant (softer). Accordingly, as shown by point P of the full line in Fig. 11 (B), there is a slight resonance produced at low frequency, but as shown by the solid line in Figure 11 (C), steering-handle vibrations have been reduced when the engine is being operated at high speed while cruising.

Since the steering bracket 18 is free to vibrate between the attachment plate 41 and the base 16b according to the structure of this invention, as shown by arrow Y in figure 3, then, when steering the outboard engine by rotating in the horizontal plane, it is necessary that the steering bracket and steering handle 16 be unitized. At this point, the structure that makes contact possible between both ends of the outer cylinder and the attachment plate 51 is one that facilitates the operation of the steering handle 16 in the horizontal plane of the outboard engine, which causes the tilting of the outer cylinder 50c and makes both ends of the outer cylinder 50c come into contact with the attachment plate 51 and the steering handle 16, respectively.

Figure 5 shows an additional embodiment in a section view taken along line Y-Y of Figure 4. Hereafter parts of embodiments that correspond to those of the previous embodiment will bear the same reference numbers, and further explanation of them will be omitted. In the embodiment pictured in Figure 3, the structure was one wherein there was a clearance *d* established between the attachment plate 51 and the steering handle 16, but in this embodiment, a projecting contact surface 18c has been formed on the steering bracket which can come in contact with the attachment plate 51 and the steering handle 16, and a clearance *d* is established between the contact surface 18c and the attachment plate 51 and steering handle 16. In this embodiment, there are no stops 53 to regulate up-down movement, and horizontal steering or up/down tilting of the engine takes place only by means of the contact 18c.

Figure 6 is a sectional view similar to that of Figure 3 which shows another embodiment. In this embodiment, the outer cylinder 50c has been eliminated, and the resilient member 50b has been directly fused to, glued to or compression fitted onto the steering bracket 18. It would also be possible to eliminate the inner cylinder 50a of Figure 3 by fusing, gluing or compression fitting the resilient material 50b directly to the operating shaft 16a.

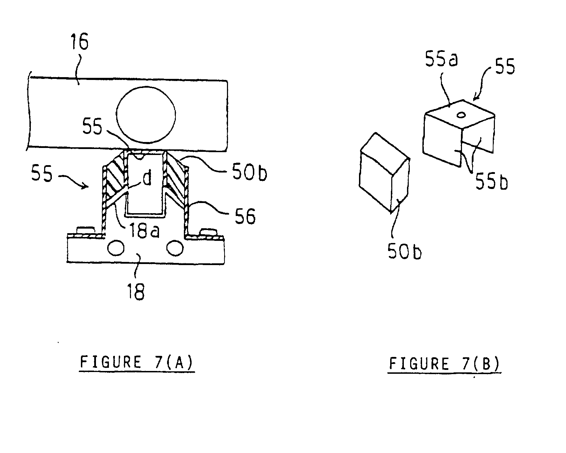

Figure 7 shows another embodiment of this invention. Figure 7(A) is a partial sectional side view, and Figure 7 (B) is a partial perspective view of the parts shown in Figure 7 (A). In this embodiment, a first transmission member 55 having a base area 55a plus a pair of perpendicular members 55b is attached to the bottom surface of the steering handle 16. On the other hand, a second transmission member 56 having a sloped area 18a at its top is mounted to the steering bracket 18. In this case, the top edge of the second transmission member 56 lies at a lower position than the base area 55 of the first transmission member, and in addition, there is a clearance *d* between the bottom ends of the perpendicular members 55a of the first transmission member 55 (corresponding to the contact surface 16c in Figure 3) and the top end of the sloping area 18a of the steering bracket 18. Then, a block of resilient material 50b is fused, glued in or compression inserted between the two perpendicular members and the second transmission member to achieve an operation that is similar to that explained for the previous embodiment.

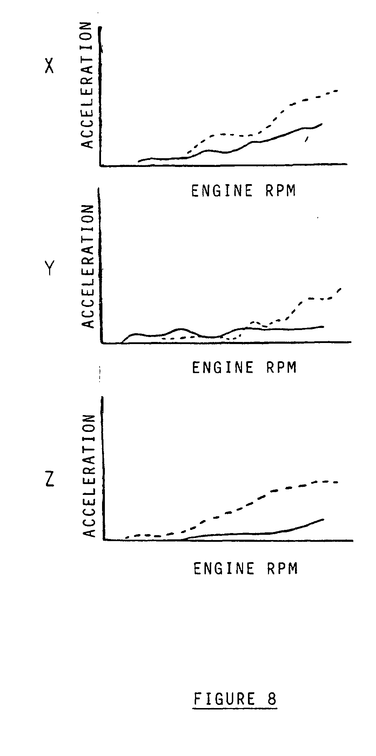

Figure 8 shows the test results for the embodiment of Figure 3. Here, X represents vibrations in the fore-aft direction, Y represents vibrations in the left-right direction, and Z represents vibrations in the up-down direction. In all directions, when comparing the solid line for this embodiment to the broken line representing the prior art, this embodiment reduced vibrations, especially in the problem area of constant operations of the engine in the high RPM range.

Next, a proposal for modification of an outboard engine cowling for an embodiment shown in Figure 1 will be described. In Figure 1, the anti-vibration, water proof resilient member 24 made of rubber, etc. is affixed between the bottom cowling and the top cowling. It is preferable that this resilient member 24 not be visible from the outside.

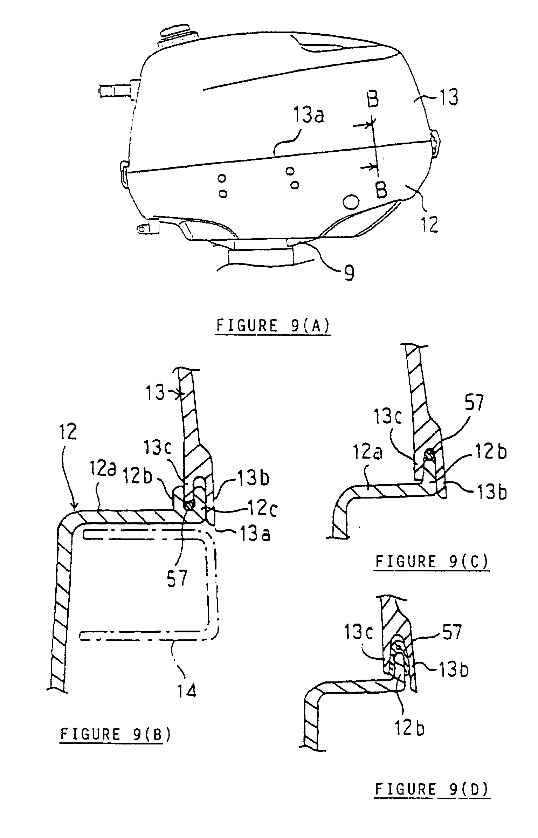

Figure 9 shows the cowling area of the improved design shown in Figure 1. Figure 9 (A) is side view of the top of the engine with the steering handle 16 and the carrying handle 14 removed. Figure 9 (B) is a sectional view along line B-B of Figure 9 (A) in the direction of the arrow, and Figures 9 (C) and (D) are sectional views similar to Figure 9 (A).

Figure 9 (A) shows the bottom edge 13a of the top cowling with the resilient member 24 not installed. In Figure 9 (B) shows the fork shaped engaging members 13b, 13c formed on the bottom edge of the top cowling 13. A flat area 12a extends at the top of the bottom cowling, which then rises upward into fork-shaped engaging members 12b and 12c. When the top cowling 13 is resting on the bottom cowling 12, the engaging member 13c is sandwiched between the engaging members 12b and 12c. In addition, the carrying handle 14 is located on the bottom cowling 12 beneath the flat area 12a.

The outside engaging member 13b of the top cowling 13 is designed to a length that prevents the bottom cowling from being seen in that area, and the inside engaging member 13c is designed so that when engaged with engaging members 12b and 12c, an open space is formed in the engagement zone. The seal material 54 is then pressed into this space. Further, very small gaps were designed to lie between the engaging members 12b and 13c, 13c and 12c, and 12c and 13b. The above described structure prevents engine vibrations from being transmitted to the top cowling 13, and it is further possible to prevent water from entering between the bottom cowling 12 and the top cowling 13.

In the embodiment shown in Figure 9 (C), the bottom cowling 12 has but one engaging member 12b which fits between the engaging members 13b and 13c of the top cowling 13. In this embodiment, a small space has been designed to remain between the engaging members 13c and 12b, members 12b and 13, and member 13c and the flat area 12a when the cowlings are fit together. In the embodiment shown in Figure 9 (D), and inverted U-shaped seal member 57 has been press fitted into the junction member 12b of the bottom cowling, and this seal member 57 fits between the engaging members 13b and 13c of the top cowling 13.

The foregoing was an explanation of embodiments of the present invention but the invention is not confined to these embodiments; various types of modifications are possible. For example, the foregoing embodiments explained the examples of using a four-cycle engine, but of course, the invention can be adapted to two cycle engines. In that case, the carburetor would be located on the front side of the engine.

As is apparent from the foregoing explanation, the inventions according to Claims land 2 allow a resilient member to freely vibrate in a clearance between the engine side (steering bracket) and the steering handle which, compared to conventional structures, allows the use of a resilient material with a lower spring constant to achieve solely low resonance at low frequencies, and to reduce vibrations in the high engine RPM cruising

When turning the outboard engine in the horizontal plane, it will be apparent that it is possible to solidly join the engine side to the steering handle.

Further, it is possible to tilt the outboard engine by rotating the steering handle in the vertical direction due to contact with a stop member. Also, the need to add the stop for up-down engine movement is eliminated, rather, the upward and downward rotation and the horizontal turning of the engine are all performed by contacting parts.

## Claims

1. Control handle (16) for a vibration generating apparatus (12), preferably an outboard engine, comprising:
an anti-vibration member (50) having a first connecting portion attached to said control handle (16), a second connecting portion attachable to said vibration generating apparatus (12) and a resilient member (50b) arranged therebetween, for supporting said handle (16) on said apparatus (12),
**characterized in that** the connecting portions of the anti-vibration member (50) are adapted to freely vibrate relative to each other within a clearance (d) delimited by contact surfaces (16c) provided on the handle (16).

2. Control handle according to claim 1, **characterized in that** said anti-vibration member (50) comprises an inner cylinder (50a) mounted on an operating shaft (16a) of the handle (16), wherein said resilient member (50b) is attached to an outer circumferential portion of said inner cylinder (50a).

3. Control handle according to claim 2, **characterized in that** said inner cylinder (50a) is axially secured on said operating shaft (16a) by an attachment plate (51), said attachment plate (51) providing one of said contact surfaces (16c) while another contact surface (16c) is provided on the other side of the inner cylinder (50a) opposite said attachment plate (51).

4. Control handle according to claim 3, **characterized in that** said another contact surface (16c) is integrally formed with said handle (16).

5. Control handle according to at least one of the preceding claims 2 to 4, **characterized in that** the said anti-vibration member (50) comprises an outer cylinder (50c) for connection with the vibration generating apparatus, wherein said resilient member (50b) is attached to an inner circumferential portion of said outer cylinder (50c), and wherein said clearance (d) is provided between end portions of said outer cylinder (50c) and said contact surfaces (16c).

6. Control handle according to at least one of the preceding claims 2 to 5, **characterized in that** said operating shaft (16a) is attached to a steering bracket (18) by said anti-vibration member (50), wherein said steering bracket (18) is attachable to the vibration generating apparatus (12).

7. Control handle according to claim 6, **characterized in that** said steering bracket comprises at least one contact surface (18c) for cooperation with one of said contact surfaces (16c) provided on the handle or the attachment plate (51) to thereby define at least one of said clearances.

8. Control handle according to claim 6 or 7, **characterized in that** a pair of contact pieces (16d) are mounted on said steering bracket (18) and face each other in an arc to define an operating arc of the operating shaft (16a) of the control handle (16), wherein within said operating arc said operating shaft (16a) is rotatable up and down in relation to a vertical direction (Z) of said vibration generating apparatus (12), and these contact pieces (16d) are equipped with stops (53).

9. Control handle according to one of claims 1 to 8, **characterized in that** at least one of the axial end faces of said resilient member (50b) is provided with an annular groove having a curved bottom in cross-section.

10. Outboard engine comprising a control handle according to one of claims 1 to 9 as its steering handle.

## Patentansprüche

1. Bediengriff (16) für eine schwingungserzeugende Vorrichtung (12), vorzugsweise einen Außenbordmotor, der umfasst:
ein Schwingungsverhinderungselement (50) mit einem ersten Verbindungsabschnitt, der an dem Bediengriff (16) angebracht ist, einem zweiten Verbindungsabschnitt, der an der schwingungserzeugenden Vorrichtung (12) angebracht werden kann, und einem federnden Element (50b), das dazwischen angeordnet ist, um den Griff (16) an der Vorrichtung (12) zu tragen,
**dadurch gekennzeichnet, dass** die Verbindungsabschnitte des Schwingungsverhinderungselementes (50) so eingerichtet sind, dass sie innerhalb eines Zwischenraums (d), der durch Kontaktflächen (156c) begrenzt wird, die an dem Griff (16) vorhanden sind, frei zueinander schwingen.

2. Bediengriff nach Anspruch 1, **dadurch gekennzeichnet, dass** das Schwingungsverhinderungselement (50) einen inneren Zylinder (50a) umfasst, der an einem Betätigungsschaft (16a) des Griffs (16) montiert ist, wobei das federnde Element (50b) an einem Außenumfangsabschnitt des inneren Zylinders (50a) angebracht ist.

3. Bediengriff nach Anspruch 2, **dadurch gekennzeichnet, dass** der innere Zylinder (50a) mit einer Anbringungsplatte (51) axial an dem Betätigungsschaft (16a) befestigt ist, wobei die Anbringungsplatte (51) eine der Kontaktflächen (16c) bildet, während die andere Kontaktfläche (16c) an der anderen Seite des inneren Zylinders (50a) gegenüber der Anbringungsplatte (51) vorhanden ist.

4. Bediengriff nach Anspruch 3, **dadurch gekennzeichnet, dass** die andere Kontaktfläche (16c) integral mit dem Griff (16) ausgebildet ist.

5. Bediengriff nach wenigstens einem der vorangehenden Ansprüche 2 bis 4, **dadurch gekennzeichnet, dass** das Schwingungsverhinderungselement (50) einen äußeren Zylinder (50c) zur Verbindung mit der schwingungserzeugenden Vorrichtung umfasst, wobei das federnde Element (50b) an einem Innenumfangsabschnitt des äußeren Zylinders (50c) angebracht ist und wobei der Zwischenraum (d) zwischen Endabschnitten des äußeren Zylinders (50c) und den Kontaktflächen (16c) vorhanden ist.

6. Bediengriff nach wenigstens einem der vorangehenden Ansprüche 2 bis 5, **dadurch gekennzeichnet, dass** der Betätigungsschaft (16a) mit dem Schwingungsverhinderungselement (50) an einer Steuerhalterung (18) angebracht ist, wobei die Steuerhalterung (18) an der schwingungserzeugenden Vorrichtung (12) angebracht werden kann

7. Bediengriff nach Anspruch 6, **dadurch gekennzeichnet, dass** die Steuerhalterung wenigstens eine Kontaktfläche zum Zusammenwirken mit einer der Kontaktflächen (16c) umfasst, die an dem Griff oder der Anbringungsplatte (51) vorhanden sind, um so wenigstens einen der Zwischenräume zu bilden.

8. Bediengriff nach Anspruch 6 oder 7, **dadurch gekennzeichnet, dass** ein Paar Kontaktteile (16d) an der Steuerhalterung (18) montiert sind und einander in einem Kreisbogen zugewandt sind, so dass sie einen Betätigungs-Kreisbogen des Betätigungsschaftes (16a) des Bediengriffs (16) bilden, wobei innerhalb des Betätigungs-Kreisbogens der Betätigungsschaft (16a) in Bezug auf eine vertikale Richtung (Z) der schwingungserzeugenden Vorrichtung (12) nach oben und nach unten gedreht werden kann, und diese Kontaktteile (16d) mit Anschlägen (53) versehen sind.

9. Bediengriff nach einem der Ansprüche 1 bis 8, **dadurch gekennzeichnet, dass** wenigstens eine der axialen Stirnflächen des federnden Elementes (50b) mit einer Ringnut versehen ist, die im Querschnitt einen gekrümmten Boden aufweist.

10. Außenbordmotor, der einen Bediengriff nach einem der Ansprüche 1 bis 9 als seinen Steuergriff umfasst.

## Revendications

1. Poignée de commande (16) pour appareil générateur de vibrations (12), de préférence un moteur hors bord, comprenant :
un élément anti-vibrations (50) comprenant une première partie de connexion fixée sur ladite poignée de commande (16), une seconde partie de connexion pouvant être fixée sur ledit appareil générateur de vibrations (12) et un élément élastique (50b) aménagé entre elles, afin de supporter ladite poignée (16) sur ledit appareil (12),
**caractérisée en ce que** les parties de connexion de l'élément anti-vibrations (50) sont adaptées pour vibrer librement l'une par rapport à l'autre à l'intérieur d'un espace (d) délimité par des surfaces de contact (16c) aménagées sur la poignée (16).

2. Poignée de commande selon la revendication 1, **caractérisée en ce que** ledit élément anti-vibrations (50) comprend un cylindre interne (50a) monté sur un arbre de fonctionnement (16a) de la poignée (16), dans laquelle ledit élément élastique (50b) est fixé sur une partie externe de circonférence dudit cylindre (50a).

3. Poignée de commande selon la revendication 2, **caractérisée en ce que** ledit cylindre interne (50a) est fixé de manière axiale sur ledit arbre de fonctionnement (16a) au moyen d'une plaque de fixation (51), ladite plaque de fixation (51) fournissant l'une desdites surfaces de contact (16c), alors qu'une autre surface de contact (16c) est fournie de l'autre côté du cylindre interne (50a) en opposition à ladite plaque de fixation (51).

4. Poignée de commande selon la revendication 3, **caractérisée en ce que** ladite autre surface de contact (16c) est formée d'une pièce avec ladite poignée (16).

5. Poignée de commande selon au moins l'une des revendications précédentes 2 à 4, **caractérisée en ce que** ledit élément anti-vibrations (50) comprend un cylindre externe (50c) destiné à être connecté avec l'appareil générateur de vibrations, dans laquelle ledit élément élastique (50b) est fixé sur une partie interne de circonférence dudit cylindre externe (50c), et dans laquelle ledit espace (d) est aménagé entre des parties d'extrémité dudit cylindre externe (50c) et lesdites surfaces de contact (16c).

6. Poignée de commande selon au moins l'une des revendications précédentes 2 à 5, **caractérisée en ce que** ledit arbre de fonctionnement (16a) est fixé sur un support de direction (18) au moyen dudit élément anti-vibrations (50), dans laquelle ledit support de direction (18) peut être fixé sur l'appareil générateur de vibrations (12).

7. Poignée de commande selon la revendication 6, **caractérisée en ce que** ledit support de direction comprend au moins une surface de contact (18c) destinée à coopérer avec l'une desdites surfaces de contact (16c) aménagées sur la poignée ou la plaque de fixation (51), afin de définir au moins l'un desdits espaces.

8. Poignée de commande selon la revendication 6 ou la revendication 7, **caractérisée en ce qu'**une paire de pièces de contact (16d) est montée sur ledit support de direction (18), lesquelles se font face l'une à l'autre dans un arc afin de définir un arc de fonctionnement de l'arbre de fonctionnement (16a) de la poignée de commande (16), dans laquelle ledit arc de fonctionnement dudit arbre de fonctionnement (16a) peut tourner vers le haut et vers le bas par rapport à une direction verticale (Z) dudit appareil générateur de vibrations (12), et ces pièces de contact (16d) comportent des butées (53).

9. Poignée de commande selon l'une des revendications 1 à 8, **caractérisée en ce que** au moins l'une des faces d'extrémité axiale dudit élément élastique (50b) comporte une gorge annulaire qui a une embase courbe lorsqu'elle est vue en coupe transversale.

10. Moteur hors bord à combustion interne comprenant une poignée de commande selon l'une des revendications 1 à 9 en tant que poignée de direction.
